(19) Europäisches Patentamt
European Patent Office
Office européen des brevets

(11) **EP 0 748 920 A1**

(12) **EUROPÄISCHE PATENTANMELDUNG**

(43) Veröffentlichungstag:
18.12.1996 Patentblatt 1996/51

(51) Int. Cl.⁶: **E06B 3/98**

(21) Anmeldenummer: 96109290.5

(22) Anmeldetag: 11.06.1996

(84) Benannte Vertragsstaaten:
AT BE CH DE DK ES FI FR GB GR IE IT LI NL PT SE

(30) Priorität: 17.06.1995 DE 19522044

(71) Anmelder: SCHÜCO International KG
D-33609 Bielefeld (DE)

(72) Erfinder:
• Scheuer, Helmut
32130 Enger (DE)
• Schwerdtner, Arno, Dipl.-Ing.
32457 Porta Westfalica (DE)

(74) Vertreter: Stracke, Alexander, Dipl.-Ing. et al
Jöllenbecker Strasse 164
33613 Bielefeld (DE)

(54) **Eck- oder T-verbindung an Rahmen oder Gestellen**

(57)

2.1 Bei der Endmontage der Verbindung sollen lose, von außen in den Verbinder eintreibbare oder einschraubbare Verbindungsmittel vermieden werden.

2.2 Die Verbindungsmittel (11) sind vor dem Einsetzen des Verbinders in das Sprossenprofil (14) im Verbinder (5) angeordnet und werden nach dem Einsetzen durch ein von außen durch eine Profilöffnung geführtes Werkzeug betätigt.

2.3 Die Eck- oder T-Verbindung ist für Rahmen von Fenstern, Türen und Fassaden sowie für sonstige Hohlprofilgestelle oder im Regalbau einsetzbar.

Fig. 2

EP 0 748 920 A1

## Beschreibung

Die Erfindung bezieht sich auf eine Eck- oder T-Verbindung an Rahmen oder Gestellen aus geschlossenen oder halboffenen Hohlprofilen mit einem in mindestens ein Profil der Verbindung einsetzbaren Verbinder, der mit einem oder mehreren Verbindungsmitteln versehen wird, die bei Betätigung im Zusammenwirken mit dem Verbinder und dem oder den zugeordneten Profilen die zu verbindenden Profile in der Verbindungsfuge kraftschlüssig zusammenführen.

Eck- oder T-Verbinder werden sowohl für Rahmen von Fenstern, Türen und Fassaden oder für sonstige Hohlprofilgestelle verwendet, die in Maschinenbausystemen oder im Regalbau Anwendung finden.

Bei den bekannten Eck- oder T-Verbindungen werden als Verbindungsmittel zylindrische Stifte, Nägel, Kegelstifte, Schrauben o.dgl. eingesetzt, die nach dem Aufstülpen des Profils oder der Profile auf den Verbinder von außen durch eine Bohrung im Profil in den Verbinderkörper eingetrieben oder eingedreht werden. Das Einsetzen der Verbindungsmittel erfolgt in der Weise, daß eine Kraftwirkung auf die zu verbindenden Profile ausgeübt und in der Verbindungsfuge ein Kraftschluß erzielt wird.

Eine Eckverbindung der genannten Art zwischen auf Gehrung geschnittenen Profilen oder Rohren ist Gegenstand der DE-PS 2 011 744.

Bei den bekannten Eck- oder T-Verbindungen werden die Verbinder und die Verbindungsmittel, nämlich Nägel, Schrauben o.dgl., separat gehandhabt, da diese Verbindungsmittel nach dem Einsetzen des Verbinders in die zu verbindenden Profile von außen in den vormontierten Verbinder eingetrieben oder eingeschraubt werden. Da es sich bei den Verbindungsmitteln um äußerst kleine Teile handelt, ist das Handling dieser Teile für den Handwerker nicht immer problemlos. Ferner muß dafür Sorge getragen werden, daß die erforderlichen Verbindungsmittel bei der Montage der Eck- oder T-Verbindung zur Verfügung stehen.

Darüber hinaus sind die im Profil anzuordnenden Bohrungen zur Erzielung eines definierten Anzugs des Profils auf die Verbindungsfuge hin mit relativ geringer Toleranz anzubringen, da die z.B. als Verbindungsmittel verwendete Senkkopfschraube noch in das Gewinde des Verbinders hineingedreht werden muß, aber andererseits möglichst so weit mit dem Senkkopf in die Wandung des Profils eintaucht, damit der Anzug gewährleistet ist, aber auch ein Überstehen des Kopfes vermieden wird, zumal in aller Regel an diesen Stellen Beschlagteile im Fensterbau bewegt werden und somit ein überstehender Schraubenkopf störend sein würde.

Sowohl im Fenster-, Türen- und Fassadenbau als auch im Regal- und Gestellbau ist der Hang zu kleinen Ansichtsbreiten der Profile vorgegeben, so daß von außen einwirkende Kräfte, z.B. durch das Einschlagen von Nägeln, zu einem Versatz der positionierten Verbinder führen kann. Hierdurch wird ein Nachrichten der Verbindung notwendig, so daß sich ein zusätzlicher Arbeitsgang ergibt.

Der Erfindung liegt die Aufgabe zugrunde, eine Eck- oder T-Verbindung der eingangs genannten Art so zu gestalten, daß bei der Montage das Eintreiben oder Eindrehen der Verbindungsmittel von außen durch eine Bohrung in dem den Verbinder aufnehmenden Profil entfällt.

Diese Aufgabe wird erfindungsgemäß dadurch gelöst, daß die Verbindungsmittel vor dem Einsetzen des Verbinders in das oder die Profile im Verbinder angeordnet und nach dem Einsetzen durch von außen durch eine Profilöffnung geführtes Werkzeug betätigt werden.

Die Verbindungsmittel und die Verbinder bilden somit vor dem Einsetzen in das oder in die Profile eine durch eine Vormontage der Verbindungsmittel gewonnene Baueinheit, durch die die Bereitstellung separater Verbindungsmittel entfällt.

Weitere Ausgestaltungen der Erfindung ergeben sich aus den Unteransprüchen.

Ausführungsbeispiele der erfindungsgemäßen Eck- oder T-Verbindung sind in den Zeichnungen dargestellt und werden im folgenden beschrieben.

Es zeigen:

| | |
|---|---|
| Fig. 1 | ein Rahmenprofil mit eingesetztem T-Verbinder und zugeordnetem Sprossenprofil vor der Endmontage, |
| Fig. 2 | die T-Verbindung zwischen dem Rahmenprofil und dem Sprossenprofil nach der Fig. 1 teilweise im Längsschnitt, |
| Fig. 3 | einen Querschnitt des in Fig. 2 dargestellten Teils des Sprossen profils, |
| Fig. 4 | eine Eckverbindung von auf Gehrung geschnittenen Rahmenprofilen im Schnitt, |
| Fig. 5 | einen Querschnitt der Rahmenprofile nach der Fig. 4, |
| Fig. 6 und 7 | konstruktive Einzelheiten in Hinsicht auf die Ausbildung und die Anordnung des Gewindestiftes im Verbinder, |
| Fig. 8 | eine Abwandlungsform des Gewindestiftes in seiner Anordnung im Verbinder und in der Zuordnung zum Rahmen- oder Sprossenprofil, |
| Fig. 9 | einen T-Verbinder für schmale Profile bzw. für Profile wärmegedämmter Fenster- oder Türkonstruktionen im Aufriß, |
| Fig. 10 | einen Schnitt nach der Linie X-X in Fig. 9, |
| Fig. 11 | einen zweiteiligen, spreizbaren Verbinder im Schnitt, eingesetzt in ein Profil, und |
| Fig. 12 und 13 | Ausführungsformen zu dem Verbinder nach der Fig. 11. |

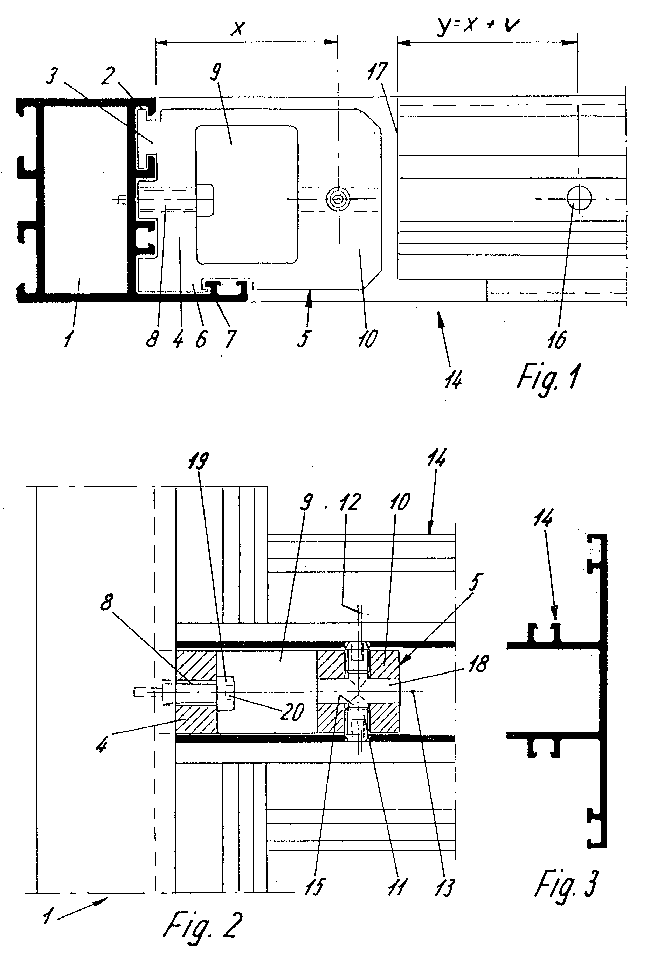

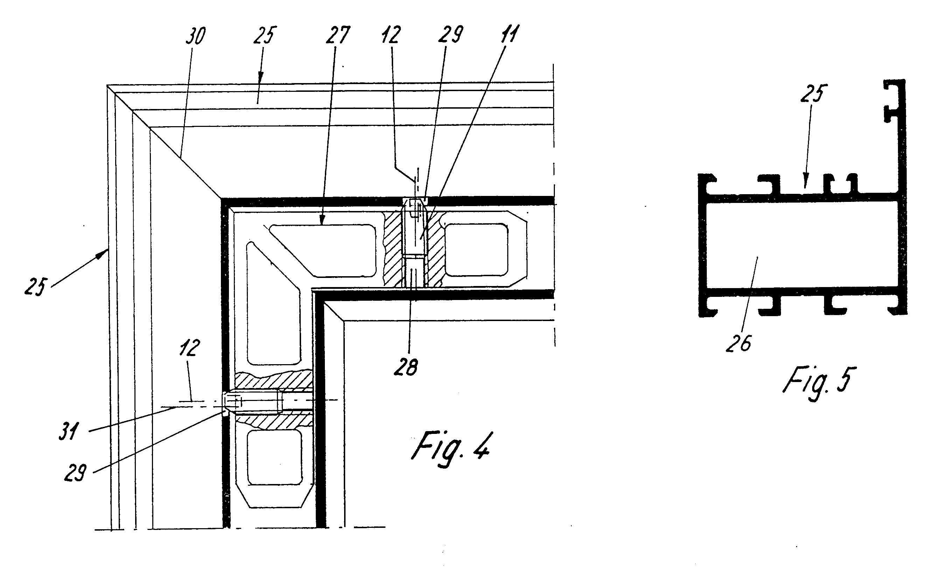

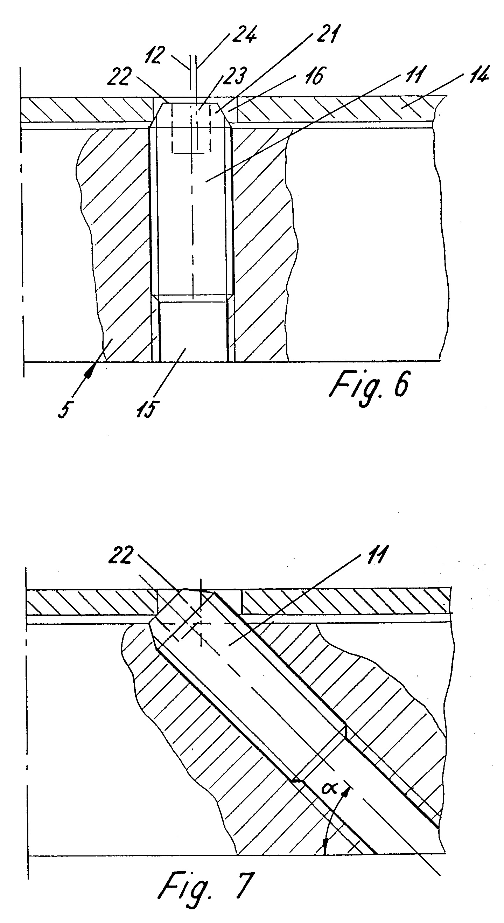

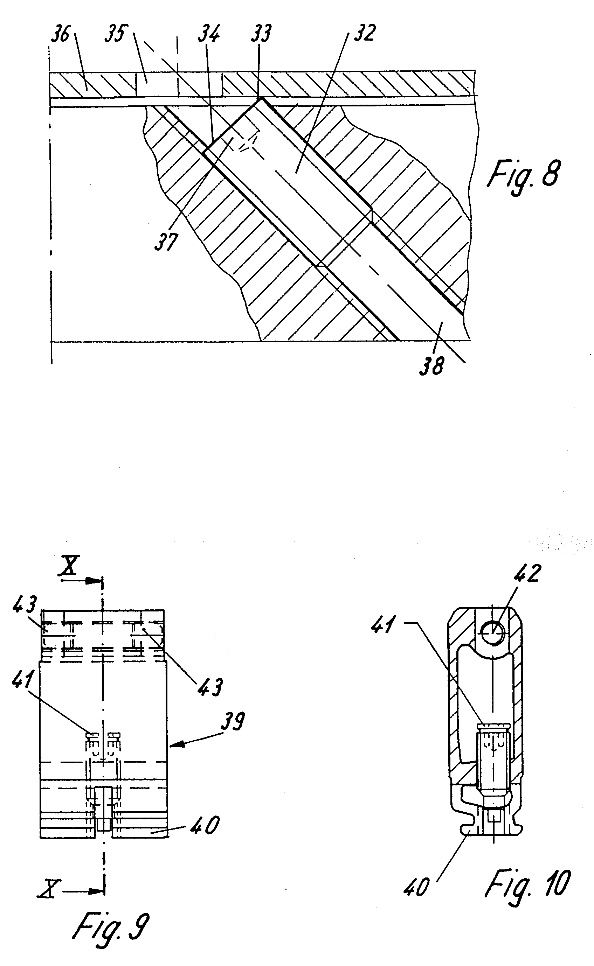

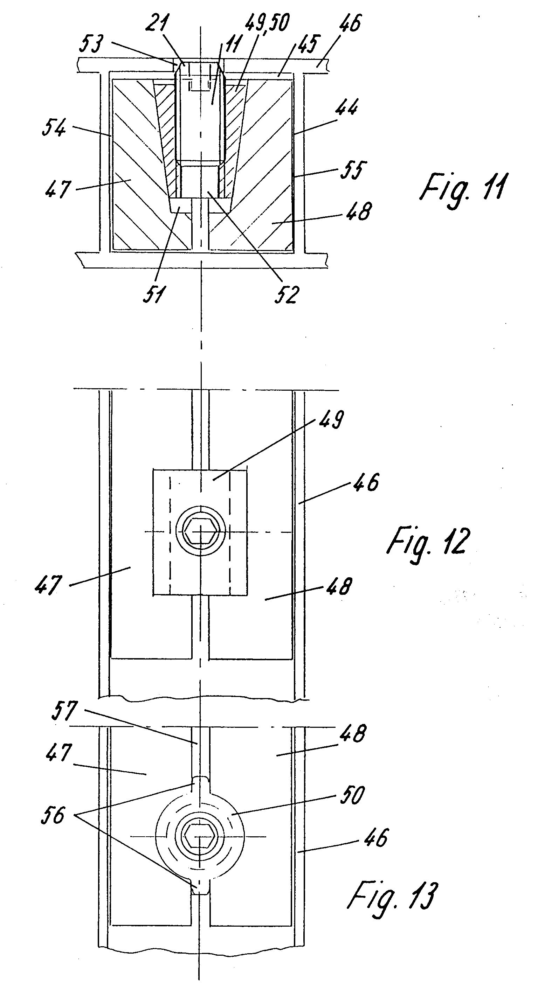

In der Fig. 1 ist ein Rahmenprofil 1 im Schnitt dargestellt, das eine C-förmige Nut 2 aufweist, in die ein formschlüssig in die Nut eingreifendes Verankerungsteils 3 eines Befestigungsfußes 4 eines T-Verbinders 5 eingeführt wurde. Dieser T-Verbinder greift ferner mit einem Fußteil 6 in eine Nut 7 formschlüssig ein und wird mittels einer Stanzschraube 8 an dem Rahmenprofil 1 festgelegt und positioniert.

Der Verbinder 5 ist mit einer Durchbrechung 9 ausgestattet, die zwischen dem Befestigungsfuß 4 und einem Verbinderteil 10 liegt, in dem Gewindestifte 11 angeordnet sind, deren Mittelachsen 12 rechtwinklig sich zur Längsachse 13 des Verbinders bzw. des mit dem Rahmenprofil 1 verbundenen Sprossenprofils 14 erstrecken.

Die Gewindestifte 11 sind in Gewindebohrungen 15 des Verbinders 5 angeordnet. Der mittige Abstand der Gewindestifte zur Verbindungsfuge zwischen dem Sprossenprofil 14 und dem Rahmenprofil 1 beträgt X.

In nicht montierter Position ist in der Fig. 1 rechts neben dem Verbinder 5 das geklinkte Sprossenprofil 14 dargestellt, das eine Bohrung 16 aufweist, die einem Gewindestift des Verbinders zugeordnet ist. Für jeden Gewindestift ist im Sprossenprofil 14 eine Bohrung 16 vorgesehen. Diese Bohrung 16 weist einen Abstand Y von der Auflagefläche 17 des Sprossenprofils 14 auf, die gleich dem Maß X plus einer Vorspannungsstrecke V ist.

Das Teil 10 des Verbinders 5 weist mittig eine in der Längsachse sich erstreckende Bohrung 18 zum Durchführen eines Betätigungswerkzeuges für die Stanzschraube 8 auf, deren Kopf 19 mit einem Innenmehrkant 20 versehen ist.

Die Gewindebohrungen 15 mit den Gewindestiften 11 sind in dem Teil 10 des Verbinders zu beiden Seiten der Bohrung 18 angeordnet.

Die Gewindestifte 11 weisen außenseitig einen Ansatz 21, der sich zu der außenseitigen Stirnfläche 22 konisch verjüngt. Von der Stirnfläche 22 erstreckt sich in das Innere des Gewindestiftes 11 ein Innenmehrkant 23 zur Aufnahme eines Betätigungswerkzeuges.

Beim Herausdrehen des Gewindestiftes 11 stützt sich der Ansatz 21 an der der Verbindungsfuge zugewandten Vorspannungsseite der Bohrung 16 des Sprossenprofils 14 ab. Aufgrund der Keilwirkung der konischen Ansatzfläche wird hierdurch das Sprossenprofil 14 in Richtung auf die Verbindungsfuge bewegt und geht eine kraftschlüssige Verbindung mit dem Rahmenprofil ein.

Aus der Fig. 6 ergibt sich auch, daß die Mittelachse 24 der Bohrung 16 gegenüber der Mittelachse 12 zu der der Verbindungsfuge abgewandten Seite ein wenig versetzt ist, so daß der konische Ansatz 21 beim Herausdrehen des Gewindestiftes 11 zunächst die Bohrungsseite erfaßt, die der Verbindungsfuge zugewandt liegt.

Die Gewindestifte 11 und auch die Gewindebohrung 15 weisen vorzugsweise ein Linksgewinde auf, damit der Monteur zur herkömmlichen Schraubenbefestigung, bei der durch Rechtsdrehen ein Anziehen der Schraube erreicht wird, nicht umzudenken braucht. Dreht der Monteur mit einem Mehrkanschlüssel den Gewindestift 11 rechts herum, so schraubt er diesen aus der Bohrung 15 heraus und in die Bohrung 16 des Sprossenprofils 14 hinein.

In der Fig. 4 ist eine Eckverbindung von auf Gehrung geschnittenen Rahmenprofilen dargestellt, in deren Kammer 26 ein Eckverbinder 27 eingesetzt ist. In jedem Schenkel des Eckverbinders 27 ist eine vorzugsweise mit einem Linksgewinde versehene Gewindebohrung 28 angeordnet, die zumindest einen Gewindestift 11 aufnimmt.

Jedem Gewindestift ist in dem Rahmenprofil eine Bohrung 29 mit einem Mittenversatz gegenüber dem Gewindestift 11 bzw. der Gewindebohrung 28 zugeordnet.

Die Gewindestifte 11 nach der Fig. 4 entsprechen in ihrem Aufbau und in ihrer Wirkweise den in der Fig. 6 aufgezeigten Gewindestiften, die im Zusammenwirken mit einem Sprossenprofil 14 beschrieben wurden.

Bei einem Herausdrehen der Gewindestifte nach der Fig. 4 aus der Gewindebohrung 28 werden die Rahmenprofile zur Gehrungsfuge 30 bewegt und in dieser Gehrungsfuge kraftschlüssig zusammengepreßt.

Die Bewegung der Rahmenprofile in Richtung zur Gehrungsfuge 30 beim Herausdrehen der Gewindestifte 11 aus der Gewindebohrung 28 wird durch den Mittenversatz zwischen der Mittelachse 12 des Gewindestiftes und der Mittelachse 31 der Bohrung 29 erreicht.

Aus der Fig. 6 ist erkennbar, daß der Mittenversatz der Bohrung 15 zur Bohrung 16 großzügiger toleriert werden kann, da bei dieser Verbindungsart nur sichergestellt werden muß, daß der zu verwendende Mehrkantschlüssel durch die Bohrung 16 in den Innenmehrkant 23 des Gewindestiftes 11 eingesetzt werden kann.

Da der Gewindestift 11 sich vor der Endmontage bereits vormontiert im Verbinder befindet, ergeben sich bei zu großem Mittenversatz` d.h. bei zu großer Vorspannung keine Schwierigkeiten die Verbindung funktionsgerecht und sauber auszuführen. Hierbei kann die Bohrung 16 kleiner als die Gewindebohrung 15 ausgeführt werden.

Bei dem Ausführungsbeispiel nach der Fig. 7 ist der Gewindestift 11 unter einem Neigungswinkel $\alpha$ in den Eckverbinder oder T-Verbinder so eingesetzt, daß der Gewindestift 11 beim Herausdrehen direkt mit seiner Stirnfläche 22 eine Kraftkomponente in Richtung auf die Verbindungsfuge der Profile ausüben kann.

Die Fig. 8 zeigt eine zur Fig. 7 abgewandelte Ausführungsform, bei der der Gewindestift 32 eine mit einer Schneidkante 33 versehene, außenseitige Stirnfläche 34 aufweist, von der ein durch eine Bohrung 35 im Profil 36 von außen zugänglicher Innenmehrkant 37 ausgeht.

Die Bohrung 35 steht bei dieser Ausführungsform mit dem Gewindestift 32 nicht mehr in direkter Wirkverbindung sondern dient lediglich dazu, ein Betätigungswerkzeug in den Innenmehrkant 37 des Gewindestiftes 32 einzuführen, um den Gewindestift aus der Gewindebohrung 38 herausdrehen zu können. Der Gewindestift 32 dringt mit seiner Schneidkante 33 in die Wand des Profils 36 ein und erzeugt durch die Neigung der Gewindebohrung 38 für eine Kraftkomponente in Richtung der Verbindungsfuge der zu verbindenden Profile.

Die Fig. 9 und 10 zeigen einen T-Verbinder 39 für schmale Profile bzw. für Profile wärmegedämmter Fenster- oder Türkonstruktionen. Dieser Verbinder verfügt über einen Befestigungsfuß 40, der in eine hinterschnittene, C-förmige Nut eines Rahmenprofils eingreift. Mittels einer Stanzschraube 41 wird der T-Verbinder 39 in seiner Position im Nutgrund des Rahmenprofils formschlüssig verankert. Im Kopfbereich des T-Verbinders 39 ist eine Gewindebohrung 42 vorgesehen, die mit einem Linksgewinde ausgestattet sein kann und Gewindestifte 43 aufnimmt.

Der T-Verbinder nach den Fig. 9 und 10 stellt eine Einheit dar, in der sowohl die Stanzschraube 41 als auch die Gewindestifte 43 vormontiert sind. Diese Figuren zeigen den Lieferzustand eines erfindungsgemäßen Verbinders.

Die Fig. 11,12 und 13 zeigen den Einsatz von Eck- und T-Verbindern, die zweiteilig aufgebaut sind und die durch Spreizung zu einer innigen Anlage an den zugeordneten Wandseiten einer Profilhohlkammer kommen.

Der Verbinder 44, der von der Innenkammer 45 eines Rahmenprofiles 46 aufgenommen wird, setzt sich aus zwei Bauteilen 47, 48 zusammen, die mittels einer Bohrungszapfenverbindung oder aber gemäß dem DE-P 2 011 744 endseitig durch eine Brücke verbunden sind.

Die Bauteile 47,48 können Schenkel eines Eckwinkels sein oder den Kopfbereich eines T-Verbinders bilden. Im Bereich der Schenkel oder im Kopfbereich des T-Verbinders ist ein Keil 49 oder ein Kegel 50 angeordnet, der in einer Aufnahme 51 zwischen den Bauteilen 47 und 48 gelagert ist.

Der Keil 49 oder der Kegel 50 ist mit einer Gewindebohrung 52 zur Aufnahme eines Gewindestiftes 11 versehen, über dessen Ansatz 21 mit konischer Außenfläche in Zusammenarbeit mit der zur Gewindebohrung 52 versetzten Bohrung 53 ein Anzug des Rahmenprofils in Richtung auf die Verbindungsfuge erzeugt wird. Während sich der Ansatz 21 an dem der Verbindungsfuge zugewandten Randteil der Bohrung 53 abstützt, wird beim Weiterdrehen des Gewindestiftes 11 der Keil 49 bzw. der Kegel 50 in die Aufnahme 51 zwischen den Bauteilen 47 und 48 nach unten gedrückt, so daß die Bauteile 47 und 48 nach außen bewegt werden und sich an den Innenflächen 54 und 55 des Rahmenprofils 46 abstützen. Mittels des Keils 49 bzw. des Kegels 50 somit die Bauteile 47,48 des Verbinders auseindergespreizt.

Während der Keil 49 aufgrund seiner Form gegen Verdrehung in der Aufnahme 51 gesichert ist, weist der Kegel 50 mindestens eine seitliche Zapfenleiste 56 auf, die in den Spalt 57 zwischen den Bauteilen 47 und 48 eingreift.

Bezugszeichen

| 1 | Rahmenprofil |
|---|---|
| 2 | Nut |
| 3 | Verankerungsteil |
| 4 | Befestigungsfuß |
| 5 | T-Verbinder |
| 6 | Fußteil |
| 7 | Nut |
| 8 | Stanzschraube |
| 9 | Durchbrechung |
| 10 | Verbindungteil |
| 11 | Gewindestift |
| 12 | Mittelachse |
| 13 | Längsachse |
| 14 | Sprossenprofil |
| 15 | Gewindebohrung |
| 16 | Bohrung |
| 17 | Auflagefläche |
| 18 | Bohrung |
| 19 | Kopf |
| 20 | Innenmehrkant |
| 21 | Ansatz |
| 22 | Stirnfläche |
| 23 | Innenmehrkant |
| 24 | Mittelachse |
| 26 | Kammer |
| 27 | Eckverbinder |
| 28 | Gewindebohrung |
| 29 | Bohrung |
| 30 | Gehrungsfuge |
| 31 | Mittelachse |
| 32 | Gewindestift |
| 33 | Schneidkante |
| 34 | Stirnfläche |
| 35 | Bohrung |
| 36 | Profil |
| 37 | Innenmehrkant |
| 38 | Gewindebohrung |
| 39 | T-Verbinder |
| 40 | Befestigungsfuß |
| 41 | Stanzschraube |
| 42 | Gewindebohrung |
| 43 | |
| 44 | Verbinder |
| 45 | Innenkammer |
| 46 | Rahmenprofil |
| 47 | Bauteil |
| 48 | Bauteil |
| 49 | Keil |
| 50 | Kegel |
| 51 | Aufnahme |
| 52 | Gewindebohrung |
| 53 | Bohrung |
| 54 | Innenfläche |
| 55 | Innenfläche |
| 56 | Zapfenleiste |

57 Spalt

**Patentansprüche**

1. Eck- oder T-Verbindung an Rahmen oder Gestellen aus geschlossenen oder halboffenen Hohlprofilen mit einem in mindestens ein Profil der Verbindung einsetzbaren Verbinder, der mit einem oder mehreren Verbindungsmitteln versehen wird, die bei Betätigung im Zusammenwirken mit dem Verbinder und dem oder den zugeordneten Profilen die zu verbindenden Profile in der Verbindungsfuge kraftschlüssig zusammenführen, **dadurch gekennzeichnet,** daß die Verbindungsmittel vor dem Einsetzen des Verbinders (5,27,39,44) in das oder die Profile im Verbinder angeordnet und nach dem Einsetzen durch ein von außen durch eine Profilöffnung geführtes Werkzeug betätigt werden.

2. Eck- oder T-Verbindung nach Anspruch 1, dadurch gekennzeichnet, daß der Verbinder (5,27,39,44) als Verbindungsmittel in Gewindebohrungen verstellbar angeordnete Gewindestifte (11,32,43) aufweist, die mit mit einem von der außenseitigen Stirnfläche (22,34) ausgehenden Innenmehrkant (23, 37) zur Aufnahme eines Betätigungswerkzeuges versehen sind.

3. Eck- oder T-Verbindung nach Anspruch 1 oder 2, dadurch gekennzeichnet, daß die Gewindestifte rechtwinklig zur Längsachse (13) des aufgesetzten Profils im Verbinder angeordnet sind.

4. Eck- oder T-Verbindung nach Anspruch 2, dadurch gekennzeichnet, daß jeder Gewindestift (11) mit einem zu der außenseitigen Stirnfläche (22) sich konisch verjüngenden Ansatz (21) ausgerüstet ist, der beim Herausdrehen des Gewindestiftes mit der der Verbindungsfuge zugewandten Seite einer Bohrung im auf den Verbinder gestülpten Sprossenprofil (14) zusammenwirkt und das Sprossenprofil (14) in Richtung der Verbindungsfuge bewegt.

5. T-Verbindung nach Anspruch 4, dadurch gekennzeichnet, daß der mittige Abstand eines jeden Gewindestiftes (11) von der Verbindungsfuge X und der mittige Abstand eines jeden dem Gewindestift im aufgesetzten Sprossenprofil (14) zugeordneten Bohrung $y = X + V$ beträgt, wobei V die Vorspannungsstrecke darstellt.

6. T-Verbindung nach Anspruch 5, dadurch gekennzeichnet, daß der Verbinder (5) eine mittige Durchbrechung (9) aufweist, die zwischen einem Befestigungsfuß (4) zur Festlegung am Rahmenprofil (1) und einem mit zwei Gewindestiften (11) ausgestatteten Verbinderteil (10) angeordnet ist.

7. T-Verbindung nach Anspruch 6, dadurch gekennzeichnet, daß der Verbinder (5) ein formschlüssig in eine C-förmige Nut (2) des Rahmenprofils (1) einführbares Verankerungsteil (3) und eine Gewindebohrung zur Aufnahme einer Schraube für die Positionierung des Verbinders (5) gegenüber dem Rahmenprofil (1) aufweist.

8. Eck- oder T-Verbindung nach Anspruch 2, dadurch gekennzeichnet, daß jeder Gewindestift so unter einem Neigungswinkel $\alpha$ in dem Verbinder angeordnet ist, daß der herausdrehende Gewindestift mit seiner Stirnfläche (22) eine kraftkomponente in Richtung auf die Verbindungsfuge der Profile ausübt.

9. Eck- oder T-Verbindung nach Anspruch 8, dadurch gekennzeichnet, daß der Gewindestift (32) eine mit einer Schneidkante (33) versehene, außenseitige Stirnfläche (34) aufweist, von der ein durch eine Bohrung (35) im Profil von außen zugänglicher Innenmehrkant (37) ausgeht.

10. Eck- oder T-Verbindung nach einem der vorhergehenden Ansprüche, dadurch gekennzeichnet, daß die im Verbinder zur Aufnahme der Gewindestifte (11,32,43) angeordneten Gewindebohrungen mit einem Linksgewinde ausgestattet sind.

11. Eck- oder T-Verbindung mit spreizbaren Eck- oder T-Verbindern nach Anspruch 1, dadurch gekennzeichnet, daß im Kopfbereich des T-Verbinders oder im Bereich eines jeden Schenkels des Eckverbinders zwischen den zu spreizenden Teilen (47,48) eine Aufnahme für einen Keil (49) oder einen Kegel (50) vorgesehen ist, der Keil (49) oder der Kegel (50) eine Gewindebohrung (52) für einen Gewindestift (11) aufweist und der Gewindestift an der außenseitigen Stirnfläche mit einem mit einem Betätigungsschlüssel durch eine Bohrung des aufgesetzten Profils zugänglichen Innenmehrkant ausgerüstet ist.

12. Eck- oder T-Verbindung nach Anspruch 11, dadurch gekennzeichnet, daß der Kegel (50) Zapfenleisten (56) aufweist, die in den Spalt (57) zwischen den zu spreizenden Verbinderteilen (47,48) sich erstrecken.

Fig. 1

Fig. 2

Fig. 3

30 25 27 12 29 11

25

28

12

31

29

*Fig. 4*

25

26

*Fig. 5*

EP 0 748 920 A1

Fig. 6

Fig. 7

Fig. 8

Fig. 9

Fig. 10

EP 0 748 920 A1

Fig. 11

Fig. 12

Fig. 13

EP 0 748 920 A1

Europäisches
Patentamt

**EUROPÄISCHER RECHERCHENBERICHT**

Nummer der Anmeldung

| EINSCHLÄGIGE DOKUMENTE | | | EP 96109290.5 |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl.6) |
| X | DE - A - 3 531 376 (WIELAND) * Totality * | 1,2,3 | E 06 B 3/98 |
| A | | 5 | |
| D,A | DE - C - 2 011 744 (SCHÜRMANN) | | |

RECHERCHIERTE SACHGEBIETE (Int. Cl.6)

E 06 B 3/00

Der vorliegende Recherchenbericht wurde für alle Patentansprüche erstellt.

| Recherchenort | Abschlußdatum der Recherche | Prüfer |
|---|---|---|
| WIEN | 05-09-1996 | KRUMPSCHMID |

**KATEGORIE DER GENANNTEN DOKUMENTEN**
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82

11